# EUROPEAN PATENT APPLICATION

(11) **EP 4 678 347 A1**
(43) Date of publication of application: **14.01.2026**
(21) Application number: 24382744.1
(22) Date of filing: 11.07.2024
(51) Int. Cl.: B25J 9/16

(54) **SYSTEM AND METHOD FOR REMOTE CONTROL OF AN OPERATION OF MANUFACTURING EQUIPMENT**

(71) Applicant: Fundacion Centro de Tecnologias de Interaccion Visual y comunicaciones Vicomtech, 20009 San Sebastian (ES)
(72) Inventor: GARCÍA GANGOITI, Ander, 20009 San Sebastian (GIPUZKOA) (ES); SÁNCHEZ TAPIA, Jairo, 20009 San Sebastian (GIPUZKOA) (ES); OREGUI BIAIN, Xabier, 20009 San Sebastian (GIPUZKOA) (ES); OJER DE ANDRÉS, Marco, 20009 San Sebastian (GIPUZKOA) (ES); MENDIZABAL ARRIETA, Iñigo, 20009 San Sebastian (GIPUZKOA) (ES); VASQUEZ CORREA, Juan Camilo, 20009 San Sebastian (GIPUZKOA) (ES)
(74) Representative: Balder IP Law, S.L.

(57) **Abstract**

System for remote control of an operation of manufacturing equipment (5), the system comprising: at least one mobile robot; at least one monitoring device (2); computing equipment (4) configured to: receive an input from the at least one monitoring device (2) concerning the operation of the manufacturing equipment (5); create a digital representation of the operation of the manufacturing equipment (5); in an event of a problem in the operation of the manufacturing equipment (5), detect the event and create a notification; provide the notification to a user (6); receive an input from the user (6), and enable the user (6) to interact with the digital representation such that the user (6) can identify a solution to the problem, said solution comprising an intervention of the at least one mobile robot (3); control the at least one mobile robot (3) for implementing the solution. Also, a method.

## Description

### TECHNICAL FIELD

The present invention relates to a system for remote control of an operation of manufacturing equipment. The system may be an apparatus. The present invention is also related to a method for remote control of the operation of manufacturing equipment. Said system may be used for implementing said method.

### STATE OF THE ART

There are known conventional systems and methods for controlling manufacturing equipment located in one or more manufacturing facilities e.g. in one or more factories. Said equipment may comprise one or more machines or apparatuses, and the operation of said machines or apparatuses may be substantially automatic, semi-automatic requiring a certain degree of manual human intervention, or manual.

Despite their apparent simplicity, said conventional known systems and methods suffer from several drawbacks, particularly the following ones. With the conventional systems and methods, when a problem occurs in the operation of the manufacturing equipment, for solving the problem typically there is required the manual intervention of one or more human experts (e.g. technicians or expert operators) at the place where the equipment is installed. This imposes significant costs and possible delays related to the need for the human experts being physically present at the place where the equipment is. Hence, with the conventional systems and methods, the problem may not be solved and the manufacturing process is stopped until the person or persons required for solving the problem can arrive at the location where the equipment is located. Moreover, with the conventional systems and methods, the solutions which are eventually implemented may be suboptimal, and the process of finding a valid optimal solution may be slow and delay the overall manufacturing process.

Therefore, there is a need for a system and a method that overcomes the drawbacks of the conventional ones.

### DESCRIPTION OF THE INVENTION

The present invention overcomes the drawbacks of conventional apparatuses and methods for controlling manufacturing equipment. In particular, the present invention allows for efficiently solving problems which may occur during the operation of the manufacturing equipment, without requiring the physical presence of a human user or operator at the location or locations where the manufacturing equipment is located. Moreover, the present invention may advantageously allow for remotely controlling a plurality of manufacturing machines located in a variety of locations such as in two or more manufacturing facilities or factories. Also, the present invention may advantageously allow for testing the validity and effectiveness of a solution to an encountered problem, before physically implementing said solution. This may in turn advantageously improve the speed with which the problem can be solved, and may also advantageously improve the safeness in the operation of the manufacturing equipment.

A first aspect of the invention concerns a system for remote control of an operation of manufacturing equipment. The system comprises: at least one mobile robot adapted to physically intervene in the operation of the manufacturing equipment; at least one monitoring device configured to monitor the operation of the manufacturing equipment; computing equipment connectable with the at least one monitoring device and the at least one mobile robot. The computing equipment is configured to: receive an input from the at least one monitoring device concerning the operation of the manufacturing equipment; create or update a digital representation of the operation of the manufacturing equipment by using the input from the at least one monitoring device; in an event of a problem in the operation of the manufacturing equipment, detect the event and create a notification related to the problem; provide the notification to a user; receive an input from a user who is at a remote location compared to the manufacturing equipment, and enable the user to interact with the digital representation such that the user can identify a solution to the problem, said solution comprising an intervention of the at least one mobile robot in the operation of the manufacturing equipment; control the at least one mobile robot for implementing the solution.

The manufacturing equipment controlled by system of the first aspect of the invention may preferably be located at one or more factories or other manufacturing facilities. Hence, optionally the manufacturing equipment may comprise machines located in a single factory or, preferably, may comprise machines located which are distributed over two or more (i.e. a plurality of) factories. Therefore, optionally and preferably the system may be provided separately from the manufacturing equipment, in which case the system may be configured to be operationally connectable with the manufacturing equipment. For example, in a preferred embodiment the system of the first aspect of the invention is configured to control preexisting manufacturing equipment. In the latter embodiment, the system may advantageously allow improving the control and the efficient operation of preexisting manufacturing equipment. Nevertheless, in another preferred embodiment, the manufacturing equipment may be part of the system. In the latter embodiment, advantageously the integration of the manufacturing equipment into the rest of the system may be optimized for achieving an optimized control of the manufacturing equipment via the rest of the system.

As mentioned, the system comprises at least one monitoring device. In some preferred embodiments the system comprises two or more monitoring devices each of which may provide a respective input to the computing equipment so that the latter, upon receiving said respective input, may use it for creating the digital representation of the operation of the manufacturing equipment. Therefore, in said embodiments wherein the system comprises two or more (i.e. a plurality of) monitoring devices, the input provided by the monitoring devices may comprise respective inputs from each of the two or more monitoring devices. Each of said respective inputs may be of a particular type, such as for example a video signal, or an audio signal, or a data feed, or an analogue or digital signal, or another type of input or signal. Moreover, each of said respective inputs may concern a respective aspect of the operation of the manufacturing equipment, or of a process that is effectuated by the manufacturing equipment when the latter is in operation. In some non-limiting examples the input from the system's at least one monitoring device may concern a temperature, a pressor, a sound, a spatial position or a movement of a component of the manufacturing equipment, a spatial position or a movement of an object being processed or moved be the manufacturing equipment, or another type of physical parameter or aspect related to the operation of the manufacturing equipment or to a manufacturing process that may be performed by the manufacturing equipment.

In some preferred embodiments of the system, the at least one monitoring device comprises any of a camera, a microphone, a sensor, or a combination thereof. Said sensor may preferably measure a parameter that may be used to define a state of the manufacturing equipment or the latter's operation.

The digital representation that is created and/or is updated by the computing equipment may advantageously allow the user to understand the encountered problem. Moreover, said digital representation may preferably be a "digital twin" of the manufacturing equipment. The term "digital twin" can be considered as a form of computer simulation of the operation of the manufacturing equipment. Also, said digital representation may also advantageously serve as a starting point in an optional subsequent simulation of an implementation of a proposed solution to the problem. Said optional subsequent simulation may be useful in a variety of ways, for example by offering to the user the possibility to understand whether said solution can be implemented in a practical way and/or whether said solution would have the desired impact to the operation of the manufacturing equipment. Moreover, in the optional case that the solution to the problem comprises implementing a plurality of steps, the aforementioned optional simulation may allow the user to identify one or more of said steps and the order or timing with which said steps should be implemented should said order or timing is important. For this reason, in a preferred embodiment according to the first aspect of the invention, the computing equipment is configured to simulate an effect of the solution to the operation of the manufacturing equipment and/or to the operation of the one or more robots.

It can be understood that the digital representation that may be created by the computing equipment, and the aforementioned optional subsequent simulation of the solution that may preferably be made via the computing equipment, may aid the user to better understand the problem and identify the corresponding solution. For advantageously further aiding the user, it may be useful if the user is also offered with an immersive experience that promotes a sensory perception of the manufacturing equipment's operation, of the encountered operational problem(s), and of the corresponding solution(s) to said problems. Said immersive experience may be realized with the aid of an extended reality equipment e.g. a VR headset and/or hand controllers, connected to the computing equipment. Hence, in a preferred embodiment of the first aspect of the invention, the system further comprises extended reality equipment connectable with the computing equipment, wherein the extended reality equipment in combination with the computing equipment is configured to provide to the user an extended reality experience related to any of the digital representation, the operation the manufacturing equipment, the operation of the one or more robots, or a combination thereof.

As mentioned further above, in the event of a problem in the operation of the manufacturing equipment, the computing equipment is configured to detect the event. For this purpose, preferably the computing equipment is configured to detect the event of the problem by any of the following ways: receiving a corresponding input or warning signal from the at least one monitoring device; processing the input from the at least one monitoring device; processing data related to the digital representation; or a combination thereof. Hence, it may be understood that optionally the monitoring device may be configured to detect the event and notify accordingly the computing equipment via a corresponding signal, e.g. the aforementioned warning signal, that may be sent from the monitoring device to the computing equipment. Alternatively, or complementary, the computing equipment may be able to itself detect the event by processing data or a signal it may receive as input from the monitoring device, or by processing data related to the digital representation created by the computing equipment. Hence, it may be understood that in some embodiments the digital representation also serves for the detection of the problem in the operation of the manufacturing equipment. Overall, the detection of the event by the computing equipment allows for the timely notification of the user regarding the event, which in turn may enable solving in a timely manner the problem.

Preferably, the computing equipment or any part thereof is connected to the at least one mobile robot or to the at least one monitoring device via a telecommunications network. Such a connection of the computing equipment with the at least one mobile robot and/or to the at least one monitoring device may advantageously enable achieving controlling remotely, even over large distances, the operation of the manufacturing equipment. Alternatively, the computing equipment may be connectable with any of the manufacturing equipment, the at least one monitoring device, or the at least one mobile robot via a local or a purpose-specific type of connection e.g. via local network or via a wired or wireless connection.

In a preferred embodiment of the invention, the computing equipment is configured to simulate a movement of the at least one mobile robot or an effect of said movement to the operation of the manufacturing equipment. Simulating said movement or the effect of said movement, may advantageously assist the user in finding a possible solution to the problem. For example, since the solution comprises an intervention of the at least one robot, a simulation of the robot movement or of an effect of said movement may advantageously serve for simulating the intervention of the robot of the effect of the intervention, before the actual intervention physically takes place. Moreover, said simulation of the robot's movement or of the movement's effect may serve the user in choosing between several alternative solutions and related alternative interventions of the robot.

In a preferred embodiment of the invention, the at least one mobile robot comprises an autonomous mobile robot. Said autonomous mobile robot may advantageously perform at least some tasks and/or make at least decisions independently, without human intervention. For this purpose, more preferably said autonomous mobile robot may be equipped with sensors, actuators, and algorithms that allow it to perceive its environment, process information, and take appropriate actions to achieve specific goals.

In a preferred embodiment of the invention, the manufacturing equipment comprises a manufacturing robot. Further preferably, said manufacturing robot comprises any of the at least one monitoring device. The optional incorporation of one or more of the at least one monitoring device into said manufacturing robot, may advantageously improve the versatility and compactness of the system. Also, the optional use of said manufacturing robot may advantageously facilitate increasing the production speed, improving the precision and consistency, enhancing the workplace safety, achieving a 24/7 operation, and boosting the overall efficiency and productivity in the manufacturing the can be achieved with the manufacturing equipment.

In a preferred embodiment of the invention, the computing equipment is configured to receive the input from the at least one monitoring device, create the digital representation, update the digital representation, receive the input from the user, and control the at least one mobile robot, in real time. Performing each of the aforementioned actions in real time may advantageously accelerate identifying a solution to the detected problem and may also advantageously allow for avoiding the evolution of the detected problem into a more severe or broader failure in the operation of the manufacturing equipment.

In a preferred embodiment of the invention, the computing equipment is connectable to, and configured to control the operation of, the manufacturing equipment. This may advantageously allow the user at the remote location to use the system's computing equipment not only for solving a problem with the operation of the manufacturing equipment, but also for directly controlling the normal day-to-day operation of the manufacturing equipment, and preferably for gathering data related to said normal operation.

In a preferred embodiment which in this text is referred to as "exemplary embodiment", the system further comprises a plurality of mobile robots and a plurality of monitoring devices. In said exemplary embodiment, each of the manufacturing equipment, the plurality of mobile robots and the plurality of monitoring devices is spread over a plurality of manufacturing facilities such that at each one of the manufacturing facilities there are located a corresponding part of the manufacturing equipment, at least one of the plurality of mobile robots and at least one of the plurality of monitoring devices. Hence, the exemplary embodiment allows for advantageously controlling a plethora of manufacturing machines spread across, i.e. distributed over, a plurality of manufacturing facilities. It may be understood that since in the exemplary embodiment different parts, e.g. different machines, of the manufacturing equipment are located in different facilities, in each of said facilities there is also at least one mobile robot and at least one monitoring device so that the system can be used for controlling the operation of the different parts, i.e. different machines, located in the different facilities. Said plurality of manufacturing facilities may be different factories or may be different sectors of an overall factory or production line which comprises a plurality of different facilities or sectors.

In a preferred embodiment which is according to the aforementioned exemplary embodiment, the computing equipment is connectable with the corresponding at least one of the plurality of mobile robots and the corresponding at least one of the plurality of monitoring devices located at any particular one of the plurality of manufacturing facilities, and the computing equipment is further configured to: receive a corresponding input from said corresponding at least one of the plurality of monitoring devices located in the particular one of the plurality of manufacturing facilities; create a corresponding digital representation of the operation of the corresponding part of the manufacturing equipment located at the particular one of the manufacturing facilities; in an event of a corresponding problem in the operation of the corresponding part of the manufacturing equipment, detect the event and create a corresponding notification related to the corresponding problem; provide the corresponding notification to a user; enable the user to interact with the corresponding digital representation such that the user can identify a corresponding solution to the corresponding problem, said corresponding solution comprising an intervention of the at least one of the plurality of mobile robots in the operation of the part of the manufacturing equipment located in the particular one of the plurality of manufacturing facilities; control the at least one mobile robot located in the corresponding manufacturing facility for implementing the corresponding solution. Hence, in the latter embodiment the system can advantageously offer to its user a comprehensive control over the operation of the manufacturing equipment in a plurality of different manufacturing facilities, and the ability to remotely solve problems occurring in said different facilities.

In a second aspect of the invention, there is provided a method for remote control of an operation of manufacturing equipment. Said method comprises: at least one monitoring device monitoring the operation of the manufacturing equipment; a computing equipment receiving an input from the least one monitoring device, wherein the computing equipment is connectable with the at least one monitoring device and at least one mobile robot; the computing equipment creating a digital representation of the operation of the manufacturing equipment by using the input from the at least one monitoring device; in an event of a problem in the operation of the manufacturing equipment, the computing equipment detecting the event and creating a notification related to the problem; the computing equipment providing the notification to a user; the computing equipment receiving an input from the user who is at a remote location compared to the manufacturing equipment, and enabling the user to interact with the digital representation such that the user can identify a solution to the problem, said solution comprising an intervention of the at least one mobile robot in the operation of the manufacturing equipment; the computing equipment controlling the at least one mobile robot for implementing the solution; the at least one mobile robot physically intervening in the operation of the manufacturing equipment.

It may be understood that the method of the second aspect of the invention may be implemented using the system of the first aspect of the invention. Hence, it may be understood that any optional or preferable features mentioned herein with respect to the first aspect of the invention, may correspond to respective optional or preferable features of the second aspect of the invention, and vice versa.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a block diagram of preferred embodiment of a system according to the invention.
Fig. 2 illustrates a preferred embodiment of a system according to the invention.
Fig. 3 illustrate a preferred embodiment of a system according to the invention.
Fig. 4 illustrates a flow diagram of preferred embodiment of a method according to the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing systems and methods according to the invention.

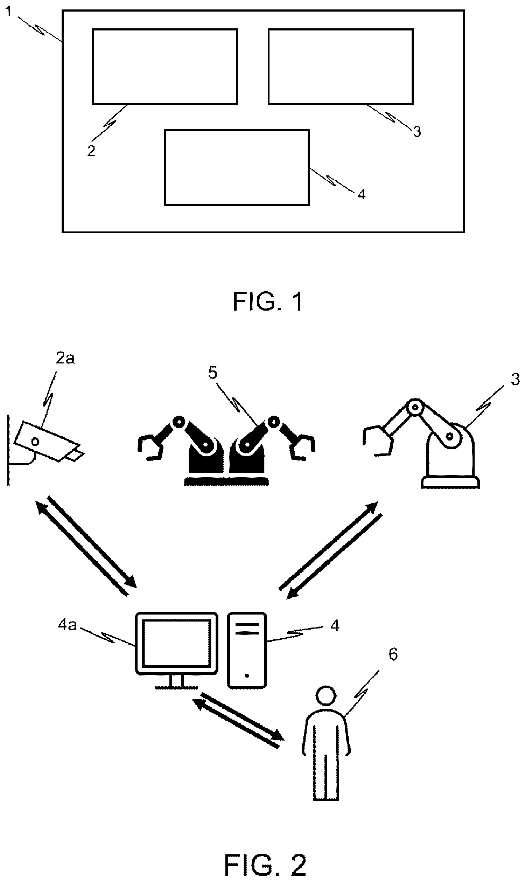

A preferred embodiment of a system according to the first aspect of the invention is explained next with reference to Fig. 1. The system 1 of Fig. 1 comprises at least one mobile robot 3, at least one monitoring device 2 and computing equipment 4 which comprises a computer. In other embodiments which are similar to the one of Fig. 1, the computing equipment comprises a plurality of computers. In the system of Fig. 1 the at least one mobile robot 3 is adapted (i.e. configured to) to physically intervene in the operation of manufacturing equipment. Said physical intervention may for example take the form of the mobile robot 3 touching or moving parts the manufacturing equipment, and said parts may for example be moving parts, switches or buttons of the manufacturing equipment. Also, said physical intervention may for example take the form of the mobile robot moving objects or materials which are processed or used by the manufacturing equipment during the latter's operation.

In the embodiment of Fig. 1, the at least one monitoring device 2 is configured to monitor the operation of the manufacturing equipment. In some embodiments of the invention, said monitoring by the at least one monitoring device comprises a direct monitoring of the manufacturing equipment itself, and a monitoring of one or more physical parameters related to a manufacturing processes conducted by the manufacturing equipment. For these purposes, the at least one monitoring device may comprise any of a camera, a microphone or a sensor. In some non-limiting examples said physical parameters comprise a temperature and/or a pressure.

In the system of Fig. 1, the computing equipment 4 is connectable with the at least one monitoring device 2 and the at least one mobile robot 3. Also, the computing equipment 4 is configured to receive an input from the at least one monitoring device 2. Said input concerns the operation of the manufacturing equipment, and may be a signal or data being transmitted from the at least one monitoring device 2 to the computing equipment 4 when the latter is connected to the at least one monitoring device 2. Also, in the embodiment of Fig. 1, the computing equipment 4 is configured to create a digital representation of the operation of the manufacturing equipment. In the embodiment of Fig. 1 said digital representation is a computer simulation generated by the computer using information related to the actual operation of the manufacturing equipment. For this purpose, the computing equipment 4 of the system 1 of Fig. 1 is configured to use as input a signal transmitted from the at least one monitoring device 2. Said signal and the corresponding input fed into the computing equipment 4 of the system 1 of Fig.1, contains information used by the computing equipment 4 for generating and updating the digital representation. Moreover, in an event of a problem in the operation of the manufacturing equipment, the computing equipment of the system 1 of Fig. 1, is configured to detect the event, as well as to create a notification related to the problem, and provide said notification to a user of the system, wherein said user is at a remote location compared to the manufacturing equipment. In addition, the computer of the computing equipment 4 in the embodiment of Fig. 1 is configured to receive an input from the user. It is noted that in some embodiments which are similar to the embodiment of Fig. 1, both the user and the computing equipment are at the same remote location away from the manufacturing equipment. However, in some other embodiments of the invention the computing equipment comprises one or more computers located in a different location compared to the user, and the overall computing equipment is configured so that the user can connect and interact remotely with said one or more computers.

In the embodiment of Fig.1, the computing equipment 4 is further configured to enable the user to interact with the digital representation such that the user can identify a solution to the problem, said solution comprising an intervention of the at least one mobile robot 3 in the operation of the manufacturing equipment. In the embodiment of Fig. 1, since the digital representation is a computer simulation that is generated by the computing equipment, the user may interact with said computer simulation for trying different possible solutions and for eventually identifying the solution to use. The identified solution may be implemented via the at least one mobile robot 3 and for this purpose in the embodiment of Fig. 1 the computing equipment 4 is configured to control the at least one mobile robot 3 for implementing the solution. It may be understood that the computing equipment 4 may comprise hardware and software suitable for the performance of any of the aforementioned operations by the computing equipment 4.

The preferred embodiment of Fig. 2 is according to the one of Fig. 1. Also, in the embodiment of Fig. 2, the system comprises the manufacturing equipment 5 which comprises manufacturing robots, and the at least one monitoring device comprises a camera 2a for observing the operation of the manufacturing robots. Moreover, in the embodiment of Fig. 2, as is indicated by the double arrows shown in Fig. 2, there is a first bidirectional connection between the computing equipment 4 and the mobile robot 3 of the system, and a second bidirectional connection between the computing equipment 4 and the camera 2a. Each of said bidirectional connections allows data to be transmitted in both directions, enabling the computer and the connected device to send and receive information to and from each other. In addition, in the embodiment of Fig. 2, the computing equipment 4 comprises a screen 4a for showing the digital representation to the user 6 of the system.

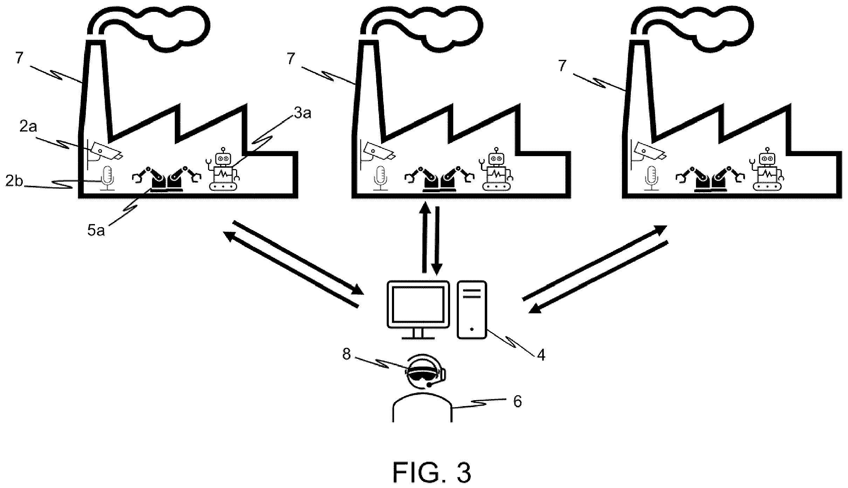

Another preferred embodiment of a system according to the first aspect of the invention is explained next with reference to Fig. 3. The system of Fig. 3 is according to the one of Fig. 1 and serves for controlling the operation of different manufacturing machines spread over different manufacturing facilities 7. The manufacturing machines located in each of the manufacturing facilities 7 can be considered as being a corresponding part 5a of the overall manufacturing equipment that is controllable with the system of Fig. 3. In the embodiment of Fig. 3, the system comprises a plurality of mobile robots spread over the different manufacturing facilities 7, and said mobile robots are autonomous mobile robots 3a. Hence, in the system of Fig. 3, in each one the manufacturing facilities 7 there is at least one autonomous mobile robot 3a. Also, the system of Fig. 3 comprises a plurality of monitoring devices spread over the different manufacturing facilities 7. Moreover, in the embodiment of Fig. 3, said monitoring devices comprises microphones 2b and cameras 2a, and in each one of the manufacturing facilities 7 there is at least one of the microphones 2b and at least one of the cameras 2a for monitoring the operation of the corresponding part 5a of the manufacturing equipment located in the same facility 7. The computing equipment 4 of the system of Fig. 1 is connected to the aforementioned robots 3a, cameras 2a, microphones 2b, and parts 5a of the manufacturing equipment, so that it can receive information regarding the operation of the manufacturing equipment, can create a digital representation of the overall manufacturing equipment or of any of said parts 5a of the manufacturing equipment, and can control the autonomous mobile robots 3a for solving problems that may possibly occur in the operation of the manufacturing equipment in each facility 7. Also, in the embodiment of Fig. 3, the computing equipment 4 is configured to do in real time, without any noticeable or significant delays and lag, the following: receive the input from the monitoring devices, create and update the digital representation, receive the input from the user 6, and control the at least one mobile robot. Also, the system of Fig. 3 further comprises extended reality equipment 8 which is connectable with the computing equipment 4. Said extended reality equipment 8 in combination with the computing equipment 4 is configured to provide to the user 6 an extended reality experience related to the digital representation, the operation of the manufacturing equipment, and the operation of the robots 3a. Hence, said extended reality equipment 8, which in the embodiment of Fig. 3 comprises a virtual reality headset may advantageously facilitate the notification of the user in case that a problem with the manufacturing equipment occurs and is detected, and may also advantageously facilitate and render immersive the interaction of the user with the digital representation that is created and updated by the computing equipment 4, so that the user can identify faster the solution to the detected problem.

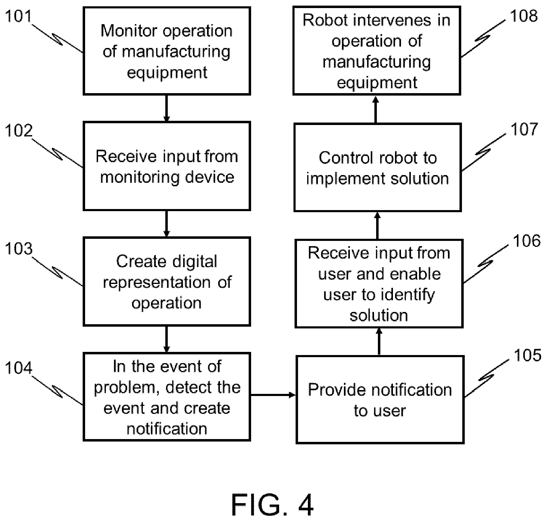

A preferred embodiment of a method according to the second aspect of the invention is explained next with reference to Fig. 4. The method of Fig. 4 is implemented with (i.e. using) the system of Fig. 1, and comprises the following:
in step 101, the at least one monitoring device 2 monitors the operation of the manufacturing equipment;
in step 102, the computing equipment 4 receives an input from the least one monitoring device 2;
in step 103, the computing equipment 4 creates a digital representation of the operation of the manufacturing equipment, and for this purpose the computing equipment uses the input it receives from the at least one monitoring device 2;
in step 104, when a problem occurs in the operation of the manufacturing equipment 5, the computing equipment 4 detects the event and creates a notification related to the problem;
in step 105, the computing equipment 4 provides the notification to a user of the system;
in step 106, the computing equipment 4 receives an input from the user who is at a remote location compared to the manufacturing equipment, and the computing equipment 4 enables the user to interact with the digital representation such that the user can identify a solution to the problem, said solution comprising an intervention of the at least one mobile robot 3 in the operation of the manufacturing equipment;
in step 107, the computing equipment 4 controls the at least one mobile robot 3 for implementing the solution;
in step 108, the at least one mobile robot 3 physically intervenes in the operation of the manufacturing equipment, and the implantation of said solution comprises the physical intervention of the robot 3.

The system of the first aspect of the invention may advantageously be used for controlling various different types of manufacturing equipment, and a non-limiting example of such a use is explained next. In said non-limiting example, an embodiment of the invention is used for controlling specialized manufacturing equipment which comprises a fully automated manufacturing line for the assembly of products. The operation of said manufacturing line involves screws fed one-by-one from an automatic ramp-shaped screw feeder. A screw feeder is a device that is typically used in assembly processes to provide screws on demand. In the example described here, the automatic ramp-shaped screw feeder provides different screws which descend along a conical ramp, and an opening of the ramp gradually decreases along the direction towards which the screws descent. The screws descend towards an end of the ramp, and as they descent they form a row of screws on the ramp. The manufacturing equipment further comprises a manufacturing robot which removes/collects the screw that reaches the end of the ramp, so that the rest of the screws in the row can further descend to take the place of the collected screwed. In the same example, the manufacturing robot after collecting the screw, it places the screw in a required position so that the screw can be used as part of the automatic assembly operation that is performed at the manufacturing line. In this example, the manufacturing robot also collects and places at respective required positions other types of objects uses during said automatic assembly operation.

In the same example, the robot's operation that is part of the overall assembly operation may be called "assembly function" of the robot. If there are no faults (problems), the assembly operation is fully automatic and the robot executes its normal assembly function without any human intervention. However, when the screw feeder becomes clogged and one screw is stuck without reaching the end of the ramp, the rest of the screws in the row behind the stuck screw also become stuck. In this situation, the robot will eventually move to the end of the ramp to remove a screw, but since there are no screws, it cannot continue with its normal assembly function. However, with the use of the embodiment of the system of the first aspect of the invention, a remote operator, i.e. a remotely located user of the system, may identify and solve the occurred problem. For this purpose, the computing equipment of the system generates a digital representation which in the example described here is a digital twin of the operation of the manufacturing line and of the manufacturing robot. Said digital twin is a digitally actionable representation of the manufacturing equipment and of the latter's operation in the real world. The digital twin may optionally and preferably be configured to be actionable both ways, meaning that changes in the real world (for example, movements of the screw feed or movement of the manufacturing robot within the assembly line) may affect the digital representation (virtual screw-feeder and virtual manufacturing robot) of such reality, which is updated when new data (information) are received by the computing equipment, and changes in the digital twin (for example, changes in the location of the virtual robot) may, if the user chooses to, force changes in the real world by the computing equipment sending instructions to the real manufacturing robot so that the latter moves accordingly.

In the same example, when a screw is stuck, the manufacturing robot generates an alarm indicating that there are no screws. This alarm is sent to the computing equipment which generates and provides to the remote operation a corresponding notice. The remote operator receives the notice and connects, via the computing equipment, to the robot to evaluate the situation through an image or a video obtained from a camera located at the manufacturing line or at the robot. Hence, it may be understood that in this example, said camera is a monitoring device of the system used by the remote operator to control the manufacturing line. In the same example, the remote operator may evaluate the situation, and after detecting that the failure is due to a stuck screw, the operator may proceed to resolve the problem as follows. Via the computing equipment and a touchscreen of the computing equipment, the remote operator views an image which is provided by the camera and shows the stuck screw, and the operator interacts with the touchscreen to indicate in the image the position of the stuck screw. The touchscreen also shows to the user the digital twin which is a virtual representation that shows the arrangement of the elements of the automatic assembly line and of the stuck screw. Using the digital twin, the operator designs a trajectory (i.e. a path or route) to be followed by the manufacturing robot so that the latter can reach the area where the stuck screw is located. In this particular example, the digital twin is fed by data on the robot's positions and movements, and said data are provided by part detector sensors located on the feeder ramp. Said part sensors, which can be considered as a type of monitoring devices, are also part of the system used by the remote operator in this particular example.

In the same example, once the remote operator is satisfied with the identified route/trajectory, before accepting said route as part of the definitive solution to the problem, the operator checks the effect of the route on the digital twin. If the effect is found to be the desired one, the operator accepts it, and the path/route is sent, via the computing equipment, to the manufacturing robot so that the latter follows said path thereby moving to the position of the stuck screw and proceeds to remove it. By removing the stuck screw, the rest will follow the guide of the ramp until the end of the rump, and the robot will be able to continue with its normal assembly operation without requiring a person to further physically intervene on the manufacturing line. It may be understood that in the aforementioned non-limiting example and the corresponding embodiment of the first aspect of the invention, the manufacturing robot is part of the manufacturing equipment and at the same time is a mobile robot that is part of the system used by the operator/user to control the operation of the manufacturing equipment. However, alternatively, it may be considered that the manufacturing robot is simply a mobile robot which is used by the operator/user to control the operation of the rest of the manufacturing equipment i.e. of the manufacturing equipment excluding the manufacturing robot.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. System for remote control of an operation of manufacturing equipment (5), the system comprising:
at least one mobile robot (3) adapted to physically intervene in the operation of the manufacturing equipment (5);
at least one monitoring device (2) configured to monitor the operation of the manufacturing equipment (5);
computing equipment (4) connectable with the at least one monitoring device (2) and the at least one mobile robot (3), and configured to:
receive an input from the at least one monitoring device (2) concerning the operation of the manufacturing equipment (5);
create a digital representation of the operation of the manufacturing equipment (5) by using the input from the at least one monitoring device (2);
in an event of a problem in the operation of the manufacturing equipment (5), detect the event and create a notification related to the problem;
provide the notification to a user (6);
receive an input from the user (6) who is at a remote location compared to the manufacturing equipment (5), and enable the user (6) to interact with the digital representation such that the user (6) can identify a solution to the problem, said solution comprising an intervention of the at least one mobile robot (3) in the operation of the manufacturing equipment (5);
control the at least one mobile robot (3) for implementing the solution.

2. System according to claim 1, wherein the at least one monitoring device (2) comprises any of a camera (2a), a microphone (2b), a sensor, or a combination thereof.

3. System according to claim 1 or 2, further comprising the manufacturing equipment (5).

4. System according to any of the previous claims, wherein the computing equipment (4) is configured to detect the event of the problem by any of:
receiving a corresponding input or warning signal from the at least one monitoring device (2);
processing the input from the at least one monitoring device (2);
processing data related to the digital representation.

5. System according to any of the previous claims, wherein the computing equipment (4) is configured to simulate an effect of the solution to the operation of the manufacturing equipment (5) and/or to the operation of the at least one mobile robot (3).

6. System according to any of the previous claims, further comprising extended reality equipment (8) connectable with the computing equipment (4), wherein the extended reality equipment (8) in combination with the computing equipment (4) is configured to provide to the user (6) an extended reality experience related to any of the digital representation, the operation the manufacturing equipment (5), the operation of the at least one mobile robot (3), or a combination thereof.

7. A system according to any of the previous claims, wherein the computing equipment (4) or any part thereof is connected to the at least one mobile robot (3) and/or to the at least one monitoring device (2) via a telecommunications network.

8. A system according to any of the previous claims, wherein the at least one mobile robot (3) comprises an autonomous mobile robot (3a).

9. System according to any of the previous claims, wherein the computing equipment (4) is configured to simulate a movement of the at least one mobile robot (3) or an effect of said movement to the operation of the manufacturing equipment (5).

10. System according to any of the previous claims, wherein the manufacturing equipment (5) comprises a manufacturing robot, preferably the manufacturing robot comprising any of the at least at least one monitoring device (2).

11. System according to any of the previous claims, wherein the computing equipment (4) is configured to receive the input from the at least one monitoring device (2), create the digital representation, update the digital representation, receive the input from the user (6), and control the at least one mobile robot (3), in real time.

12. System according to any of the previous claims, wherein the computing equipment (4) is connectable to, and configured to control the operation of, the manufacturing equipment (5).

13. A system according to any of the previous claims, comprising a plurality of mobile robots (3) and a plurality of monitoring devices (2), and wherein each of the manufacturing equipment (5), the plurality of mobile robots (3) and the plurality of monitoring devices (2) is spread over a plurality of manufacturing facilities (7) such that at each one of the plurality of manufacturing facilities (7) there are located a corresponding part (5a) of the manufacturing equipment (5), at least one of the plurality of mobile robots (3) and at least one of the plurality of monitoring devices (2).

14. A system according to claim 13, wherein the computing equipment (4) is connectable with the corresponding at least one of the plurality of mobile robots (3) and the corresponding at least one of the plurality of monitoring devices (2) located at any particular one of the plurality of manufacturing facilities (7), and the computing equipment is configured to:
receive a corresponding input from said corresponding at least one of the plurality of monitoring devices (2) located in the particular one of the plurality of manufacturing facilities (7);
create a corresponding digital representation of the operation of the corresponding part (5a) of the manufacturing equipment (5) located at the particular one of the manufacturing facilities (7);
in an event of a corresponding problem in the operation of the corresponding part (5a) of the manufacturing equipment (5), detect the event and create a corresponding notification related to the corresponding problem;
provide the corresponding notification to a user (6);
enable the user (6) to interact with the corresponding digital representation such that the user (6) can identify a corresponding solution to the corresponding problem, said corresponding solution comprising an intervention of the at least one of the plurality of mobile robots (3) in the operation of the part (5a) of the manufacturing equipment (5) located in the particular one of the plurality of manufacturing facilities (7);
control the at least one mobile robot (3) located in the corresponding manufacturing facility for implementing the corresponding solution.

15. Method for remote control of an operation of manufacturing equipment (5), the method comprising:
at least one monitoring device (2) monitoring the operation of the manufacturing equipment (5);
a computing equipment (4) receiving an input from the least one monitoring device, wherein the computing equipment (4) is connectable with the at least one monitoring device (2) and at least one mobile robot (3);
the computing equipment (4) creating a digital representation of the operation of the manufacturing equipment (5) by using the input from the at least one monitoring device (2);
in an event of a problem in the operation of the manufacturing equipment (5), the computing equipment (4) detecting the event and creating a notification related to the problem;
the computing equipment (4) providing the notification to a user (6);
the computing equipment (4) receiving an input from the user (6) who is at a remote location compared to the manufacturing equipment (5), and enabling the user (6) to interact with the digital representation such that the user (6) can identify a solution to the problem, said solution comprising an intervention of the at least one mobile robot (3) in the operation of the manufacturing equipment (5);
the computing equipment (4) controlling the at least one mobile robot (3) for implementing the solution;
the at least one mobile robot (3) physically intervening in the operation of the manufacturing equipment (5).
